Europäisches Patentamt

European Patent Office

Office européen des brevets

(19)

(11) Veröffentlichungsnummer: **0 009 264**
B1

(12) # EUROPÄISCHE PATENTSCHRIFT

(45) Veröffentlichungstag der Patentschrift:
10.11.82

(51) Int. Cl.³: **B 62 D 1/18, B 60 K 37/00**

(21) Anmeldenummer: 79103653.6

(22) Anmeldetag: 26.09.79

(54) Lenkvorrichtung für Kraftfahrzeuge mit einem Pralltopf.

(30) Priorität: 27.09.78 DE 2842020

(43) Veröffentlichungstag der Anmeldung:
02.04.80 Patentblatt 80/7

(45) Bekanntmachung des Hinweises auf die Patenterteilung:
10.11.82 Patentblatt 82/45

(84) Benannte Vertragsstaaten:
CH DE FR GB IT NL SE

(56) Entgegenhaltungen:
CH-A-205 050
FR-A-1 006 094
FR-A-1 044 930
FR-A-1 439 225
FR-A-1 440 124
US-A-1 944 905
US-A-2 465 825
US-A-2 622 690

(73) Patentinhaber: Pilatzki, Bernd, Wüllnerstrasse 115,
D-5000 Köln 41 (DE)

(72) Erfinder: Pilatzki, Bernd, Wüllnerstrasse 115,
D-5000 Köln 41 (DE)

(74) Vertreter: Freischem, Werner, Dipl.-Ing. et al,
Patentanwälte Dipl.-Ing. W. Freischem Dipl.-Ing. I.
Freischem An Gross St. Martin 2, D-5000 Köln 1 (DE)

## Lenkvorrichtung für Kraftfahrzeuge mit einem Pralltopf

Die Erfindung bezieht sich auf eine Lenkvorrichtung für Kraftfahrzeuge mit einem von einer Lenkspindel getragenen Lenkrad und mit einem Pralltopf, in dem Anzeigeinstrumente und bzw. Bedienungselemente angeordnet sind und der feststehend sowie – vom Fahrer aus gesehen – vor den Lenkradspeichen innerhalb des Lenkrades angeordnet ist.

Eine Lenkvorrichtung dieser Art ist bekannt aus der DE-A-2 131 902. Bei dieser bekannten Vorrichtung ist der im Lenkrad angeordnete Pralltopf mit einem fahrzeugfesten, nicht drehbaren Teil des Fahrzeuges fest verbunden und das Lenkrad ist über ein Planetengetriebe mit der Lenkspindel gekuppelt. Diese bekannte Lenkvorrichtung hat zwar den Vorteil, dass der Pralltopf mit seinen Anzeigeinstrumenten und Bedienungselementen stets fahrzeugfest bleibt und sich nicht zusammen mit dem Lenkrad mitdreht, sie hat aber den schwerwiegenden Nachteil, dass der technische Aufwand relativ gross ist und dass die erforderliche Betriebssicherheit nicht gewährleistet ist. Es ist nicht auszuschliessen, dass insbesondere Störungen im Planetengetriebe, welches das Lenkrad mit der Lenkspindel kuppelt, auftreten.

Der vorliegenden Erfindung liegt die Aufgabe zugrunde, eine Lenkvorrichtung zu schaffen, welche die Nachteile der bekannten Lenkvorrichtung vermeidet und die trotz geringen technischen Aufwandes im hohen Masse betriebssicher und leicht montierbar ist.

Diese Aufgabe wird erfindungsgemäss dadurch gelöst, dass das Lenkrad starr an der Lenkspindel befestigt ist und dass der Pralltopf mit einem fahrzeugfesten Bauteil über mindestens zwei bewegliche Kupplungselemente kuppelbar ist, die derart von einem mit dem Lenkrad verbundenen Steuerteil bewegbar sind, dass mindestens ein Kupplungselement in Arretierstellung steht, während zum Durchgang einer Lenkradspeiche ein anderes Kupplungselement aus der Arretierstellung heraus bewegbar ist.

Bei der erfindungsgemässen Vorrichtung ist das Lenkrad über seine Speichen stets starr mit der Lenkspindel verbunden. Der im Lenkrad gelagerte Pralltopf dreht sich dennoch nicht mit dem Lenkrad, weil eines der Kupplungselemente den Pralltopf gegenüber einem fahrzeugfesten Bauteil arretiert und somit festhält.

Die Kupplungselemente sind zweckmässigerweise in Ausnehmungen eingreifende Teile, wie Bolzen, Stifte, Kugeln, Riegel oder dergleichen, die verschiebbar oder verschwenkbar geführt sind und die von dem mit der Lenkspindel verbundenen Steuerteil bewegbar sind. Statt formschlüssig arbeitende Kupplungselemente können aber auch Elemente benutzt werden, die eine Kupplung durch Reibschluss herstellen. Als Steuerteil können auch die Speichen des Lenkrades dienen, so dass ein Kupplungselement beim Passieren einer Speiche unmittelbar von dieser Speiche aus ihrer Kupplungsposition gebracht wird und nach Passieren der Speiche beispielsweise von einer Feder wieder in die Arretierstellung gedrückt wird.

Die verschiebbaren oder verschwenkbaren Kupplungselemente können im Pralltopf angeordnet sein oder aber an einem fahrzeugfesten Teil. Die Kupplungselemente können von Federn an die Kurvenbahn eines Steuerteils gedrückt werden, welche die Kupplungselemente gegen die Kraft einer Feder beim Passieren einer Speiche aus ihrer Arretierstellung herausbewegt.

Die Kupplungselemente können aber auch von Steuerteilen bewegt werden, welche die Kupplungselemente sowohl in die Arretierstellung als auch in die Entriegelungsstellung bewegen. In diesem Fall werden die Kupplungselemente von der Kurvenbahn des Steuerteils, zum Beispiel der äussere Rand einer Steuerscheibe, eingreift.

Obgleich die beweglichen Kupplungselemente und deren Führungs- und Steuerteile so ausgebildet werden können, dass Störungen nicht auftreten können, kann es zweckmässig sein, diese Teile so auszulegen, dass die Kupplungselemente von den Speichen des Lenkrades weggedrückt werden, falls sie nicht von den Steuerteilen in die Entriegelungsposition bewegt worden sind.

Weil bei der erfindungsgemässen Lenkvorrichtung das Lenkrad fest mit der Lenkspindel verbunden bleibt, kann diese Vorrichtung auch mit geringem Aufwand an bereits vorhandene Fahrzeuge angebracht werden. Vorteilhafterweise erfolgt die Übertragung der Informationen für die Anzeigeinstrumente und bzw. oder die Bedienungselemente drahtlos. Aus diesem Grunde sind einerseits im Pralltopf und anderseits an einem fahrzeugfesten Bauteil, insbesondere in Nähe des Pralltopfes, elektronische Sende- und elektronische Empfangseinheiten angeordnet, welche die Informationen elektromagnetisch oder mittels Licht- oder Schallwellen übertragen. An der Rückseite der elastischen bzw. nachgiebigen Prallwand kann eine gedruckte Schaltung angebracht sein, welche die in der Prallwand angeordneten Anzeigeinstrumente und Bedienungselemente bzw. Sensoren mit der im Pralltopf angeordneten elektronischen Sende- und Empfangseinheit verbindet.

Die Übertragung der Information kann aber auch über Schleifringe oder dergleichen erfolgen, insbesondere auch unter Verwendung impulsgesteuerter Sende- und Empfangsgeräte.

Weitere Merkmale der Erfindung ergeben sich aus den Patentansprüchen.

In der folgenden Beschreibung werden Ausführungsbeispiele der Erfindung unter Bezugnahme auf die Zeichnungen näher erläutert. Die Zeichnungen zeigen in

Fig. 1 eine Draufsicht auf ein Lenkrad mit Pralltopf,

Fig. 2 eine Schnittansicht der erfindungsgemässen Lenkvorrichtung,

Fig. 3, 4 und 5 unterschiedliche Ausführungsformen von Kupplungselementen und deren Steuerteilen.

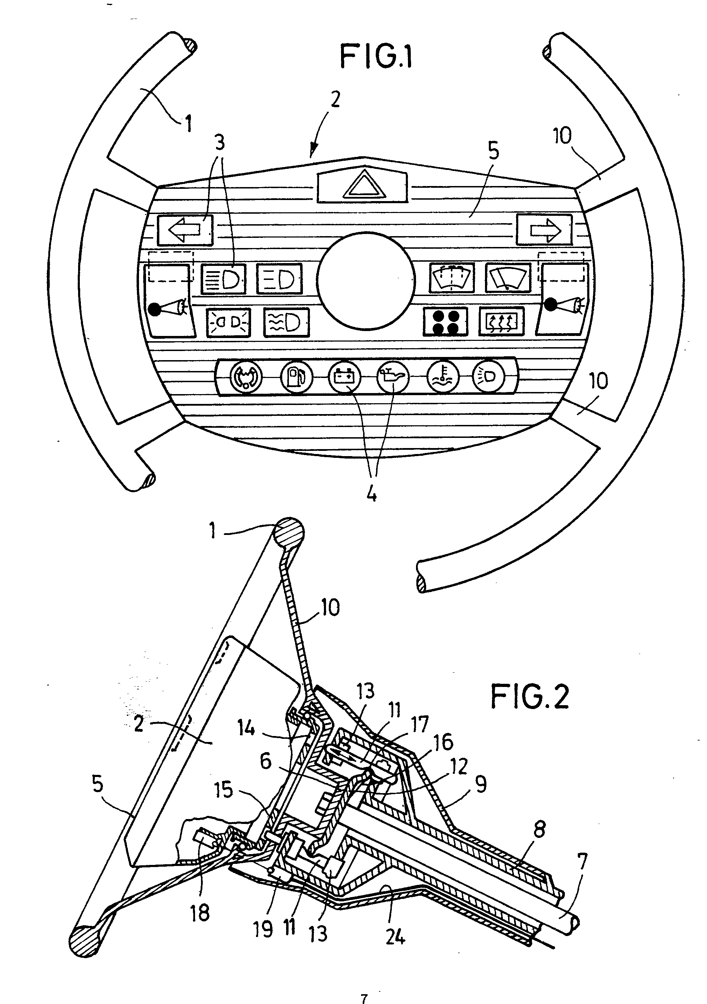

Bei der Lenkvorrichtung nach den Fig. 1 und 2 ist innerhalb des Lenkrades 1 ein Pralltopf 2 angeordnet, der an seiner dem Fahrzeugführer zugewandten Seite Bedienungselemente 3 und Anzeigeinstrumente 4 aufweist, die in einer Prallwand 5 eingesetzt sind. Die Prallwand 5 besteht aus einem nachgiebigen Material und der Pralltopf 2 ist mit polsterndem Material ausgefüllt.

Die Bedienungselemente 3, zum Beispiel zum Einschalten des Lichtes, der Hupe, des Scheibenwischers, der Richtungsanzeige und dergleichen können als Sensortasten ausgebildet sein und nehmen nur geringen Raum in Anspruch.

Der Pralltopf 2 ist über Wälzlager oder Gleitlager auf der Lenkradnabe 6 gelagert und gehalten. Die Lenkradnabe 6 ist starr mit der Lenkspindel 7 verbunden, die ihrerseits im Lenkstock 8 drehbar gelagert ist. Eine Verkleidung 9 umgibt die Lenkradnabe 6 und den oberen Teil der Lenkspindel 7 und des Lenkstockes 8.

Die Lenkradnabe 6 ist über Speichen 10 mit dem Lenkrad 1 verbunden. Damit der Pralltopf 2 beim Drehen des Lenkrades 1 sich nicht mitdreht, wird der Pralltopf von beweglichen Kupplungselementen 11 festgehalten, welche den Pralltopf 2 mit einem fahrzeugfesten Teil, nämlich dem Lenkstock 8 kuppeln. Die Kupplungselemente 11 sind in Fig. 2 als verschiebbare Stifte oder Bolzen ausgebildet, die in Führungskörpern 13 verschiebbar geführt sind und die von einer in axialer Richtung arbeitenden Steuerscheibe 12 in eine Entriegelungsstellung und in die Arretierstellung bewegt werden. In Fig. 2 befindet sich der untere Kupplungsstift 11 in der Arretier- oder Kupplungsstellung. Er greift dabei in eine am Boden 15 des Pralltopfes 2 befindliche Ausnehmung 14 ein. Der obere Kupplungsstift 11 ist dagegen von der Kurvenbahn 16 der Steuerscheibe 12 so weit axial verschoben, dass er den Weg für den Durchgang der oberen Speiche 10 freigibt. Die beweglichen Kupplungselemente 11 sind derart zu den Speichen 10 radial versetzt angeordnet, dass stets ein Kupplungselement 11 in Kupplungsstellung steht. Die im wesentlichen axial zur Lenkspindel 7 bewegbaren bolzenförmigen Kupplungselemente 11 werden von der Steuerscheibe 12 sowohl in die Kupplungsstellung bewegt als auch in die Entkupplungsstellung. Dazu greift die Kurvenbahn 16 am Rand der Steuerscheibe 12 in Ausnehmungen 17 der Kupplungselemente.

Es ist aber auch möglich, die Kupplungselemente 11 nur einseitig an eine Kurvenscheibe anliegen zu lassen, wenn diese Kupplungselemente durch Rückstellfedern belastet sind, die die Kupplungselemente in die Kurvenbahn der Steuerscheibe 12 drücken.

Wie Fig. 2 zeigt, ist im Pralltopf 2 eine Sende- und Empfängerelektronik 18 angeordnet, die mit einer Sende- und Empfängerelektronik 19 zusammenarbeitet, welche in Nähe des Pralltopfes 2 an einem fahrzeugfesten Teil 8 angeordnet ist. Auf diese Weise gelingt es, die Bedienungselemente 3 und Anzeigeinstrumente 4 drahtlos mit den elektrischen Verbrauchern und Messstellen zu verbinden. Diese drahtlose Übertragung der Informationen hat zur Folge, dass der Montageaufwand des innerhalb des Lenkrades angeordneten Pralltopfes gering ist.

Die Bedienungselemente 3 und Anzeigeinstrumente 4 können über eine auf der Rückseite der Prallwand 5 angeordnete aufgedruckte Schaltung mit der Empfänger- und Sendeelektronik 18 im Pralltopf 2 verbunden sein. Die Sende- und Empfängerelektronik 19 am fahrzeugfesten Teil 8 ist über einen Kabelbaum 24 mit den verschiedenen elektrischen Verbrauchern und Messstellen verbunden.

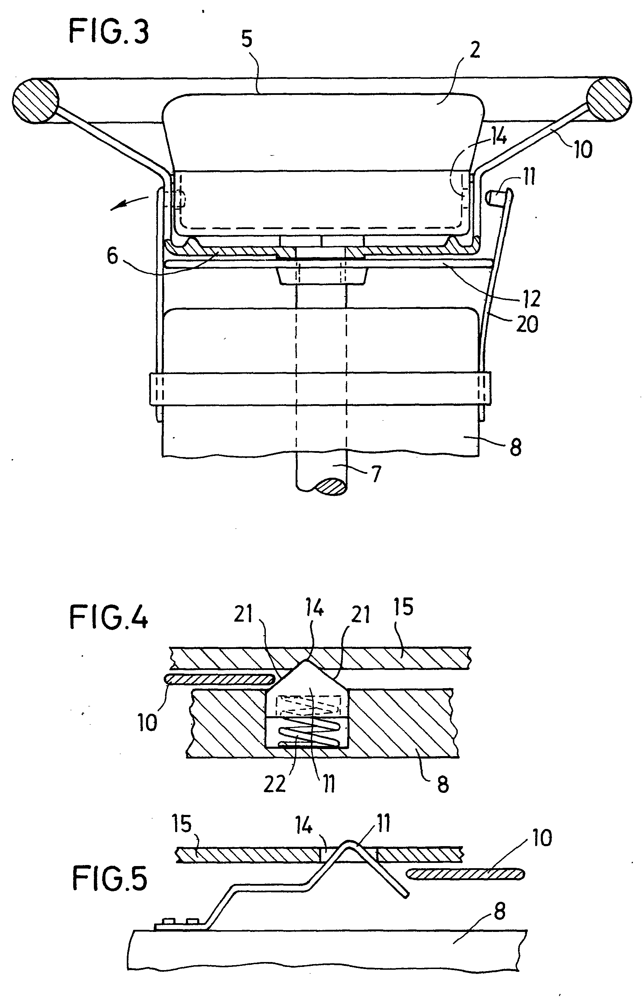

Bei dem Ausführungsbeispiel nach Fig. 3 sind die Kupplungselemente 11 an den freien Enden von ausschwenkbaren Haltegliedern 20 angeordnet, die am fahrzeugfesten Teil 8 befestigt sind. Durch Rückstellfedern werden die Kupplungselemente 11 in Kupplungsstellung gehalten. Da bei dem Ausführungsbeispiel nach Fig. 3 die Halteglieder 20 Blattfedern sind, sind also keine zusätzlichen Federn erforderlich, um die Kupplungselemente 11 in Kupplungsstellung zu halten. Auf der Lenkspindel 7 ist eine Steuerscheibe 12 befestigt, welche die ausschwenkbaren Halteglieder 20 radial nach aussen drückt, wenn eine Speiche 10 eine Kupplungsstelle passiert. Anstelle der Steuerscheibe 12 können auch an der Lenkradnabe 6 Nocken angeordnet sein, welche beim Durchgang der Speichen die Kupplungselemente in die Entriegelungsstellung bewegen.

Bei dem Ausführungsbeispiel nach Fig. 4 sind die Kupplungselemente 11 mit Auflaufflächen 21 versehen, die in den Bewegungsbereich der Speichen 10 ragen. In dem dargestellten Kupplungszustand drückt eine Feder 22 das Kupplungsglied 11 in eine am Boden 15 des Pralltopfes 2 angeordnete rillenförmige Ausnehmung 14. Wenn eine Speiche 10 diese Kupplungsstelle passieren will, dann drückt diese Speiche 10 auf eine Auflauffläche 21 des Kupplungselementes 11 und drückt das Kupplungselement 11 gegen die Wirkung der Feder 22 in die Entkupplungsstellung. Die Kupplungselemente 11 können sowohl am fahrzeugfesten Teil 8 oder aber auch im Pralltopf 2 angeordnet sein. Anstelle eines formschlüssigen Eingriffes der Kupplungselemente 11 kann auch ein Reibschluss der Kupplungselemente 11 vorgesehen sein. Ferner können auch die Kupplungselemente 11 mit elastischen oder geriffelten oder sonstwie aufgerauhten Gegenflächen zusammenarbeiten.

Bei dem Ausführungsbeispiel nach Fig. 5 wird das Kupplungselement 11, die Rückstellfeder, die Auflauffläche 21 und das verschwenkbare Halteglied von einer gebogenen Blattfeder gebildet, die sich selbsttätig in Arretierstellung stellt und die von den Speichen 10 des Lenkrades 1 aus ihrer Kupplungsstellung herausgedrückt wird.

**Patentansprüche.**

1. Lenkvorrichtung für Kraftfahrzeuge mit einem von einer Lenkspindel (7) getragenen Lenkrad (1) und mit einem Pralltopf (2), in dem Anzeigeinstrumente (4) und bzw. oder Bedienungselemente (3) angeordnet sind und der feststehend sowie – vom Fahrer aus gesehen – vor den Lenkradspeichen (10) innerhalb des Lenkrades (1) angeordnet ist, dadurch gekennzeichnet, dass das Lenkrad (1) starr an der Lenkspindel (7) befestigt ist und der Pralltopf (2) über mindestens zwei bewegliche Kupplungselemente (11) mit einem fahrzeugfesten Bauteil (8) kuppelbar ist, die derart von einem mit dem Lenkrad (1) verbundenen Steuerteil (10, 12) bewegbar sind, dass mindestens ein Kupplungselement (11) in Kupplungsstellung steht, während zum Durchlass einer Lenkradspeiche (10) ein anderes Kupplungselement (11) aus der Kupplungsstellung heraus bewegt ist.

2. Lenkvorrichtung nach Anspruch 1, dadurch gekennzeichnet, dass die beweglichen Kupplungselemente (11) durch Formschluss kuppelbar sind.

3. Lenkvorrichtung nach Anspruch 1, dadurch gekennzeichnet, dass die beweglichen Kupplungselemente (11) durch Reibschluss kuppelbar sind.

4. Lenkvorrichtung nach einem der Ansprüche 1 bis 3, gekennzeichnet durch die beweglichen Kupplungselemente (11) in Kupplungsstellung haltende Federn.

5. Lenkvorrichtung nach Anspruch 4, dadurch gekennzeichnet, dass die Kupplungselemente (11) in Kupplungsstellung in den Bewegungsbereich der Speichen (10) ragende und mit diesen derart zusammenwirkende Auflaufflächen (21) aufweisen, dass bei Passieren einer Speiche (10) das jeweilige Kupplungselement (11) aus seiner Kupplungsstellung bewegt wird.

6. Lenkvorrichtung nach einem der Ansprüche 1 bis 4, dadurch gekennzeichnet, dass die Kupplungselemente (11) von einer Kurvenbahn (16) eines Steuerteils (12) bewegbar sind.

7. Lenkvorrichtung nach Anspruch 6, dadurch gekennzeichnet, dass die Kupplungselemente (11) formschlüssig mit der Kurvenbahn (16) des Steuerteils (12) gekuppelt sind.

8. Lenkvorrichtung nach einem der Ansprüche 1 bis 7, dadurch gekennzeichnet, dass die beweglichen Kupplungselemente (11) im Pralltopf (2) angeordnet sind.

9. Lenkvorrichtung nach einem der Ansprüche 1 bis 7, dadurch gekennzeichnet, dass die beweglichen Kupplungselemente Blattfedern sind.

10. Lenkvorrichtung nach einem der Ansprüche 1 bis 9, dadurch gekennzeichnet, dass die Bedienungselemente (3) und Anzeigeinstrumente (4) drahtlos über eine im Pralltopf (2) angeordnete Sende- und Empfängerelektronik (18) und über eine in Nähe des Pralltopfes (2) fahrzeugfest angeordnete Sende- und Empfängerelektronik (19) mit den elektrischen Verbrauchern und den Messstellen verbunden sind.

## Claims

1. Steering device having a steering wheel (1) supported by a steering shaft (7), and a shock absorbing pad (2) in which provision is made for respectively, indicating instruments (4) and/or operating controls (3), arranged stationary within the steering wheel (1) and also – as seen by the driver – before the spokes (10), characterized by the steering wheel (1) being rigidly connected to the steering shaft (7), and by the shock absorbing pad (2) allowing coupling by means of at least two displaceable coupling elements (11) to a component (8) immovably attached to the vehicle, the coupling elements being movable by a control component (10, 12) linked to the steering wheel (1) in such a manner that at least one coupling element (11) will be in the coupling position while another coupling element (11) has been moved out of the coupling position in order to allow the passing of a steering wheel spoke (10).

2. Steering device as per claim 1, characterized by the displaceable coupling elements (11) allowing coupling by positive engagement.

3. Steering device as per claim 1, characterized by the displaceable coupling elements (11) allowing coupling by frictional engagement.

4. Steering device as per one of the claims 1 to 3, characterized by springs holding the displaceable coupling elements (11) in the coupling position.

5. Steering device as per claim 4, characterized by the coupling elements (11) being provided with abutting inclines (21) which in the coupling position will project into the zone of motion of the spokes (10) and act conjointly with the latter in such a manner that the respective coupling elements (11) will be displaced from its coupling position upon the passing of a spoke (10).

6. Steering device as per one of the claims 1 to 4, characterized by the coupling elements (11) being displaceable by the cam curve (16) of a control component (12).

7. Steering device as per claim 6, characterized by the coupling elements (11) being in positive engagement with the cam curve (16) of the control component (12).

8. Steering device as per one of the claims 1 to 7, characterized by the displaceable coupling elements (11) being arranged in the shock absorbing pad (2).

9. Steering device as per one of the claims 1 to 7, characterized by the displaceable coupling elements (11) being leaf springs.

10. Steering device as per one of the claims 1 to 9, characterized by the operating controls (3) and indicating instruments (4) being in wireless communication with the electrical users and the measuring points over transmitting and receiving electronics (18) arranged in the shock absorbing pad (2) and over transmitting and receiving electronics, stationarily arranged in the vehicle near the shock absorbing pad (2).

## Revendications

1. Dispositif de conduite pour véhicules automobiles comprenant un volant (1), porté par une colonne de direction (7) et un absorbeur de choc (2) dans lequel sont aménagés des instruments indicateurs (4) et/ou éventuellement de commodité (3), et qui est fixé, vu du conducteur, devant les branches (10) du volant, à l'intérieur du volant (1), caractérisé en ce que le volant (1) est fixé de manière rigide à la colonne de direction (7) et que l'absorbeur de choc (2) peut être couplé avec un élément de construction (8), fixé au véhicule, par l'intermédiaire d'au moins deux éléments de couplage mobiles par rapport à un élément de commande (10–12), lié au volant (1), de sorte qu'au moins un élément de couplage (II) soit en position de couplage, tandis qu'un autre élément de couplage (11) soit sorti de la position de couplage, pour permettre le passage d'une branche (10) du volant.

2. Dispositif de conduite selon la revendication (1), caractérisé en ce que les éléments de couplage mobiles (11) peuvent être couplés par l'intermédiaire d'une fermeture profilée.

3. Dispositif de conduite selon la revendication 1, caractérisé en ce que les éléments de couplage mobiles (11) peuvent être couplés par l'intermédiaire d'une fermeture à friction.

4. Dispositif de conduite selon l'une des revendications 1 à 3, caractérisé en ce que des ressorts maintiennent les éléments de couplages mobiles (11) en position de couplage.

5. Dispositif de conduite selon la revendication 4, caractérisé en ce que les éléments de couplage (11) présentent, en position de couplage, des surfaces (21) se dressant dans la zone de mouvement des branches (10) et coopérant avec ces derniers de manière que, lors du passage d'une branche (10), l'élément de couplage respectif (11) soit sorti de sa position de couplage.

6. Dispositif de conduite selon l'une des revendications 1 à 4, caractérisé en ce que les éléments de couplage (11) sont mobiles par rapport à une trajectoire courbe d'un élément de commande (12).

7. Dispositif de conduite selon la revendication 6, caractérisé en ce que les éléments de couplage (11) sont couplés, par une fermeture profilée, avec la trajectoire courbe (16) de l'élément de commande (12).

8. Dispositif de conduite selon l'une des revendications 1 à 7, caractérisé en ce que les éléments de couplages mobiles (11) sont aménagés dans l'absorbeur de choc (2).

9. Dispositif de conduite selon l'une des revendications 1 à 7, caractérisé en ce que les éléments de couplage mobiles (11) sont des ressorts à lames.

10. Dispositif de conduite selon l'une des revendications 1 à 9, caractérisé en ce que les instruments de commodité (3) et de mesure (4) sont reliés, sans fil, aux appareils électriques et aux points de mesure par l'intermédiaire d'un ensemble électronique émetteur-récepteur (18), aménagé dans l'absorbeur de choc (2), et d'un ensemble électronique émetteur-récepteur (19), solidaire du véhicule, au voisinage de l'absorbeur de choc (2).

# FIG.1

# FIG.2

**FIG.3**

**FIG.4**

**FIG.5**